# EUROPÄISCHE PATENTANMELDUNG

(11) **EP 2 995 871 A1**
(43) Veröffentlichungstag der Anmeldung: **16.03.2016**
(21) Anmeldenummer: 15405054.6
(22) Anmeldetag: 10.09.2015
(51) Int. Cl.: F24D 3/16, F24F 5/00

(54) **DECKENELEMENT SOWIE HEIZ- UND KÜHLDECKE**

(30) Priorität: 12.09.2014 CH 13852014
(71) Anmelder: Barcol-Air Group AG, 8603 Schwerzendbach (CH)
(72) Erfinder: Djordjevic, Bojan, 9242 Oberuzwil (CH); Reetz, Ulrich, 65582 Dietz (DE)
(74) Vertreter: Wagner, Wolfgang Heribert

(57) **Zusammenfassung**

Die Erfindung betrifft ein Deckenelement mit mehreren Deckenplatten (2c) von 0,3mm bis 0,8mm Dicke, welche aus einem verformbaren Material mit hoher Wärmeleitfähigkeit wie z.B. Aluminium bestehen und an deren Unterseiten jeweils Mäander (7) einer Deckenleitung angebracht sind. Anlageflächen an den Oberseiten der Deckenplatten (2c) sind mit der Unterseite einer Raumdecke (8) ganzflächig verklebt und dienen zu deren Vorkühlung während Ruhephasen. Zusätzlich ist eine unterhalb der Deckenplatten (2c) angeordnete, durch eine Isolationsschicht (19) von ihr getrennte Abdeckung aus Lochplatten (11) vorgesehen, an deren Oberseite Mäander (17) zur direkten Kühlung des Raumes angeordnet sind. Bei einer Heiz- und Kühldecke aus derartigen Deckenelementen bedecken diese die Unterseite der Raumdecke (8) gleichmässig zu 20% bis 80%, sodass ausgedehnte freie Zwischenbereiche vorhanden sind, die sich bei Vorkühlung der Raumdecke (8) oberhalb der Deckenplatten (2c) durch Wärmeleitung in derselben ebenfalls abkühlen und dann direkt über Strahlung und Konvektion den Raum kühlen.

## Beschreibung

### Technisches Gebiet

Die Erfindung betrifft ein Deckenelement für eine Heiz- und Kühldecke sowie eine derartige Deckenelemente umfassende Heiz- und Kühldecke. Heiz- und Kühldecken dieser Art werden zum Klimatisieren von Räumen vor allem im gewerblichen Bereich, also von Büros, Sitzungszimmern usw. eingesetzt.

### Stand der Technik

Es sind schon viele Deckenelemente vorgeschlagen worden, mit denen neben dem Raum auch die meist aus Beton bestehende Raumdecke gekühlt wird, was es u.U. erlaubt, den Energieverbrauch vor allem bei Kühlung zu verringern, indem Ruhephasen mit geringer Wärmelast, die meist in die Nachtstunden mit ihren tieferen Aussentemperaturen fallen, dazu benutzt werden, die Raumdecke vorzukühlen. Dabei sind verschiedene Schwierigkeiten zu überwinden wie etwa das Auftreten zu tiefer Temperaturen am Beginn einer Betriebsphase, meist also am Morgen und ungenügende Kühlwirkung gegen ihr Ende, meist am Nachmittag und Abend, welche energieintensive Gegenmassnahmen erforderlich machen können wie etwa direktes Heizen am Morgen und später zusätzliche starke Direktkühlung. Zusätzliche Direktkühlung ist in den meisten Fällen zwar nicht zu vermeiden, aber es ist im Sinne der Energieeinsparung wünschenswert, sie möglichst gering halten zu können.

Bei bekannten derartigen Deckenelementen ist die Wirkung der Vorkühlung im allgemeinen schwach, weil das Deckenelement von der Raumdecke beabstandet ist und daher nur durch Strahlung und freie Konvektion Wärme mit der Unterseite der Raumdecke austauscht. Die Raumdecke wird wegen der schwachen thermischen Kopplung an das Deckenelement nur wenig gekühlt und ihre Wirkung als Wärmesenke zu Zeiten hoher Wärmelast ist nur gering.

Ein solches Deckenelement, bei dem die Deckenplatte mit Abstand unterhalb der Raumdecke angeordnet ist, ist aus EP 1 422 482 A1 bekannt. Bei diesem Deckenelement liegt ausserdem die Deckenleitung nur an einem umlaufenden Profil an, das mit dem Rand der Deckenplatte thermisch eng verbunden ist, während die übrigen Teile derselben nur über die verhältnismässig geringe Wärmeleitung in der dünnen Deckenplatte selbst gekühlt werden. Aus diesen Gründen - ungenügende ganzflächige Kühlung der Deckenplatte und durch einen Luftspalt gestörter Wärmeübergang zur Raumdecke - ist die Wirksamkeit der Deckenkühlung nicht so ausgeprägt wie zu wünschen wäre.

Diesbezüglich ähnliche Deckenelemente sind EP 1 862 742 A1 und WO 2010/034 498 A2 zu entnehmen.

Aus EP 1 167 888 A2 ist eine Heiz- und Kühldecke bekannt, bei der die Deckenelemente die Unterseite der Raumdecke nahezu vollständig bedecken. Die Leitungen verlaufen nicht durch die Deckenelemente, sondern zwischen ihnen. Die Deckenelemente bestehen jeweils aus einer Deckenplatte und einer mit Abstand unterhalb derselben angeordneten Grundplatte, die an den Rändern verbunden und auch thermisch miteinander gekoppelt sind. Dadurch wird mit der Raumdecke zwangsläufig immer auch der Raum gekühlt, was bei ausgeprägter Vorkühlung der Raumdecke leicht zu einer anfänglichen Unterkühlung des Raumes führen kann. Ausserdem ist die thermische Kopplung zwischen Grundplatte und Deckenplatte durch eine zwischen ihnen angeordnete geräuschabsorbierende Schicht trotz der Verbindung der Platten an den Rändern beeinträchtigt, sodass die thermische Verbindung zwischen der Unterseite der Raumdecke und dem Raum eher schwächer bleibt als im Sinne einer wirksamen Ausnützung der Vorkühlung der Raumdecke während der Ruhephasen zu wünschen wäre. Im Ganzen wird gewöhnlich eine ausgeprägte Direktkühlung während der Betriebsphasen erforderlich sein, bei der zwangsläufig auch die Raumdecke mitgekühlt wird. Deren Vorkühlung kann im Grossen und Ganzen lediglich diesen Mitkühleffekt verringern, aber nicht viel zur Raumkühlung beitragen.

Aus EP 2 743 596 A1 ist ein Deckenelement bekannt, bei dem eine Deckenplatte mit an der Unterseite einer Deckenleitung zur Durchleitung von Kühlflüssigkeit an der Oberseite parallele Rippen aufweist, welche Kanäle begrenzen, durch welche Luft zwischen der Deckenplatte und der Raumdecke durchgeleitet wird. Bei diesem Deckenelement ist der direkte. Kontakt zwischen der Deckenplatte und der Raumdecke gering, die Kühlung der Raumdecke erfolgt fast nur über die Luftströmung.

Ein gattungsgemässes Deckenelement ist schliesslich aus DE 103 46 503 A1 bekannt. Es weist rechteckige Deckenplatten auf, deren Oberseiten der Unterseite einer Raumdecke zugewandt sind, während an deren Unterseiten jeweils mittig eine in Längsrichtung durchgehende Deckenleitung angeordnet ist. Obwohl die Deckenplatten verhältnismässig schmal sind und die Unterseite der Raumdecke nur zu einem geringen Teil bedecken, ist der Abstand zwischen der Deckenleitung und dem Rand der Deckenplatte doch ziemlich gross, sodass für einen guten Wärmeübergang zwischen der Deckenleitung und der Oberseite der Deckenplatte gute Wärmeleitung innerhalb der Deckenplatte gewährleitet sein muss. Dies erfordert eine eher dicke Deckenplatte, die entsprechend starr ist. Sie liegt daher an der gewöhnlich nicht ganz ebenen Unterseite der Raumdecke in der Regel nicht satt an, wodurch der Wärmeübergang zwischen der Deckenplatte und der Raumdecke beeinträchtigt ist. Gegenmassnahmen wie eine Glättung der Unterseite der Raumdecke wären aufwendig und würden die Kosten merklich erhöhen.

### Darstellung der Erfindung

Der Erfindung liegt die Aufgabe zu Grunde, ein gattungsgemässes Deckenelement sowie eine Heiz- und Kühldecke anzugeben, bei denen ein sehr guter Wärmeübergang zwischen der Deckenplatte und der Raumdecke gewährleistet ist, ohne dass besondere, die Kosten steigernde Massnahmen erforderlich wären. Diese Aufgabe wird durch die Erfindung, wie sie in den Ansprüchen gekennzeichnet ist, gelöst.

Durch die erfindungsgemässen Massnahmen ist vor allem die Kühlung der Raumdecke während Ruhephasen mit geringer Wärmelast, gewöhnlich während der Nacht, und ihre Ausnützung während Betriebsphasen mit hoher Wärmelast, gewöhnlich während des Tages, wirksamer und damit die durch die Vorkühlung der Raumdecke während der Ruhephasen erzielte Verringerung des Energieverbrauchs ausgeprägter.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Unteransicht eines Oberteils eines erfindungsgemässen Deckenelements,
- Fig. 2: eine Draufsicht auf ein Unterteil des erfindungsgemässen Deckenelements und
- Fig. 3: einen Schnitt durch das erfindungsgemässe Deckenelement längs III-III in Fig. 1, 2, bei dem einige Teile von Leitungen weggelassen sind.

### Wege zur Ausführung der Erfindung

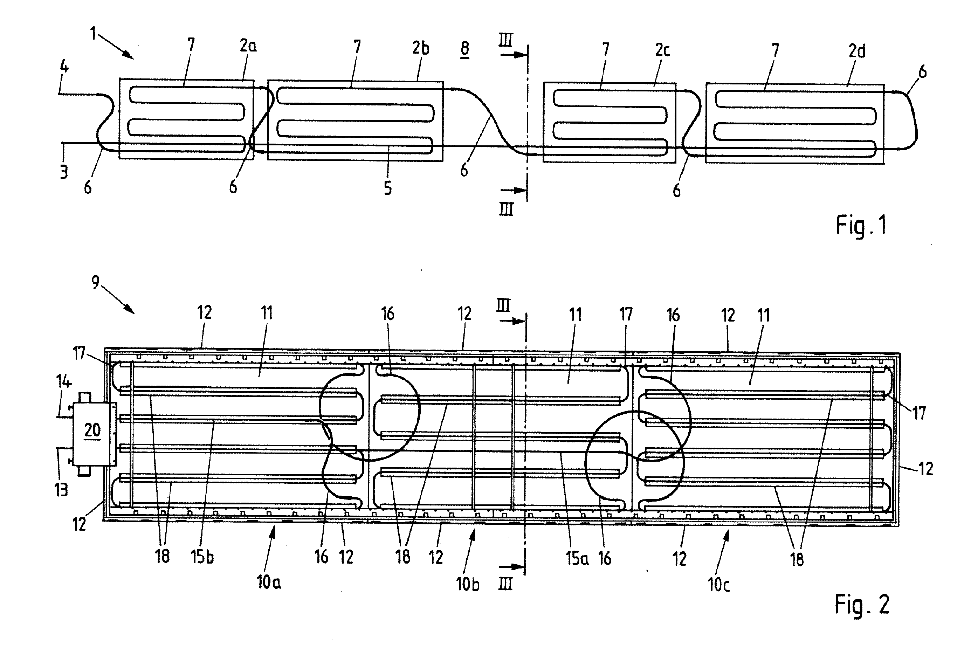

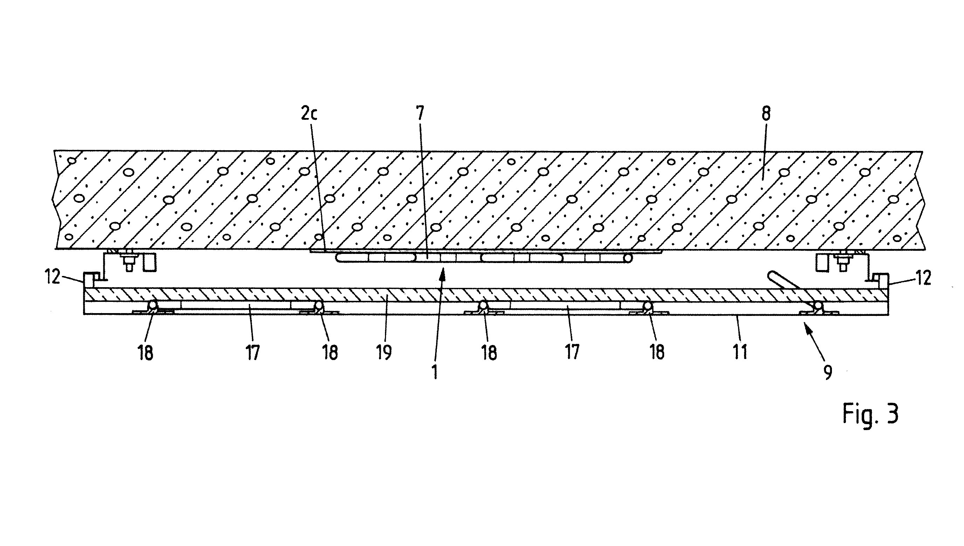

Ein Oberteil 1 (Fig. 1, 3) des Deckenelements umfasst mehrere mit Abstand in einer Längsrichtung aufeinanderfolgende im wesentlichen ebene Deckenplatten 2a,b,c,d konstanter Dicke sowie eine Deckenleitung, welche einen Deckenvorlaufanschluss 3 mit einem Deckenrücklaufanschluss 4 verbindet und zur Durchleitung eines fluiden Heiz- und Kühlmittels, meist Wasser, dient. Die Deckenleitung umfasst eine Längsleitung 5 sowie mehrere durch Schläuche 6 mit derselben sowie untereinander in Reihe verbundene Mäander 7. Jeder der Mäander 7 ist an der Unterseite einer der Deckenplatten 2a,b,c,d angebracht und liegt eng an ihr an, so dass guter thermischer Kontakt gewährleistet ist. Die Zweige des Mäanders 7 sind jeweils gleichmässig über die Unterseite verteilt, derart, dass kein Teil derselben weiter als um eine Höchstdistanz von dem Mäander 7 entfernt ist, die 15cm, vorzugsweise 10cm und insbesondere ca. 5cm betragen kann. So ist die gesamte Deckenplatte 2a;b;c;d unabhängig von ihrer Grösse thermisch eng an die Deckenleitung, d.h. den jeweiligen Mäander 7 gekoppelt, ohne dass die Anforderungen an die Wärmeleitfähigkeit der Deckenplatten 2a,b,c,d in Längsrichtung und quer dazu sehr hoch wären.

Die Deckenplatten 2a,b,c,d bestehen jeweils aus einem - unter den üblichen Montagebedingungen mit Temperaturen von zwischen 10° und 30° - manuell oder mit einfachen Werkzeugen plastisch oder elastisch verformbaren Material, sodass die Oberseite'jeder der Deckenplatten 2a,b,c,d jeweils eine im wesentlichen ebene, dabei aber anpassbare Anlagefläche bildet, die ganzflächig an die Unterseite einer gewöhnlich aus Beton bestehenden Raumdecke 8 angedrückt werden kann, sodass sie satt an ihr anliegt, auch wenn die besagte Unterseite etwas uneben ist. Das Material der Deckenplatten 2a,b,c,d weist ausserdem eine hohe Wärmeleitfähigkeit von mindestens 5W/mK, vorzugsweise von mindestens 30W/mK auf.

Besonders geeignet sind duktile Metalle oder Legierungen wie Aluminium oder Aluminiumlegierungen, doch können auch andere Materialien mit hoher Wärmeleitfähigkeit, z.B. mit Kohlefaser oder Graphit-, Graphitexpandat- oder Metallpartikeln, gefüllte gut wärmeleitende Kunststoffe eingesetzt werden. Die Dicke der Deckenplatten 2a,b,c,d sollte jeweils gering sein, damit leichte Verformbarkeit und gute Wärmeübertragung zwischen dem Mäander 7 und der Oberseite der Deckenplatte 2a;b;c;d gewährleistet sind. Vor allem wenn sie aus Aluminium oder einer Aluminiumlegierung bestehen, beträgt sie vorzugsweise zwischen 0,3mm und 0,8mm, insbesondere ca. 0,5mm. Verformbarkeit und ausreichende Wärmeleitfähigkeit parallel zur Unterseite der Raumdecke 8 sind dadurch gleichermassen gewährleistet. Die Anlagefläche einer Deckenplatte hat gewöhnlich einen Flächeninhalt von mindestens 0,2m² und vorzugsweise von zwischen 0,3m² und 0,6m². Die Anlageflächen der Deckenplatten 2a,b,c,d bedecken im Beispiel insgesamt ungefähr 2,1m².

Die Anlageflächen der Deckenplatten 2a,b,c,d sind jeweils mit der Unterseite der Raumdecke 8 verklebt. Dabei sollte die Dicke der Kleberschicht ebenfalls gering sein, vorzugsweise 1mm oder weniger, damit der Wärmeübergang möglichst wenig gestört wird. Der Kleber sollte eine möglichst hohe Wärmeleitfähigkeit haben. Er kann zu deren Verbesserung mit Partikeln aus einem Material mit hoher Wärmeleitfähigkeit, z.B. Graphit-, Graphitexpandat- oder Metallpartikeln, versetzt sein.

Werden die mit Klebstoff bedeckten Anlageflächen der Deckenplatten 2a,b,c,d an die Unterseite der Raumdecke 8 angedrückt, wobei die Deckenplatten soweit erforderlich verformt werden, so verkleben sie ganzflächig mit ihr, sodass die Deckenplatten 2a,b,c,d lückenlos, nur durch die Kleberschicht von ihr getrennt, an der Raumdecke 8 formschlüssig anliegen. So wird auf einfache Weise eine sehr enge thermische Ankopplung der Raumdecke 8 an die Deckenplatten 2a,b,c,d und über diese an die Mäander 7 der Deckenleitung erreicht.

Ein mit dem Oberteil 1 nicht direkt verbundenes Unterteil 9 (Fig. 2, 3) umfasst ein Gehäuse aus drei in Längsrichtung aufeinanderfolgenden Abschnitten 10a,b,c, welche jeweils als Lochplatte 11 mit längsverlaufenden seitlichen und im Fall der äusseren Abschnitte 10a,c auch querverlaufenden abschliessenden Zargen 12 ausgebildet und an der Räumdecke 8 aufgehängt sind. Die aneinander anschliessenden Lochplatten 11 bilden zusammen eine ebene gelochte Abdeckung, die das Deckenelement gegen den Raum abschliesst. Eine Raumleitung, welche, ebenfalls zur Durchleitung eines fluiden Kühlmittels wie Wasser, einen Raumvorlaufanschluss 13 mit einem Raumrücklaufanschluss 14 verbindet, umfasst Längsleitungen 15a,b und dazwischen durch Schläuche 16 mit denselben und untereinander in Reihe verbundene Mäander 17, die sich jeweils über eine Oberseite einer Lochplatte 11 erstrecken.

Die geraden Abschnitte eines Mäanders 17 liegen in Führungsrinnen an den Oberseiten von parallelen Schienen 18 mit ebenen rechteckigen Kontaktflächen, die jeweils mit der Oberseite der Lochplatte 11 verklebt sind. Zwischen den Schienen 18 kann die Oberseite der Lochplatte 11 jeweils von einem Akustikvlies bedeckt sein.

Der Raumvorlaufanschluss 13 und Raumrücklaufanschluss 14 sind vorzugsweise vom Deckenvorlaufanschluss 3 und Deckenrücklaufanschluss 4 unabhängig, d.h. die Raumleitung ist von der Deckenleitung unabhängig ansteuerbar, sodass Deckenleitung und Raumleitung mit verschiedenen Strömungsraten von Kühlmittel durchströmt werden können, insbesondere kann auch nur die Deckenleitung oder nur die Raumleitung durchströmt werden.

Auf der Raumleitung liegt eine über die Fläche der Lochplatten 11 durchgehende Isolationsschicht 19 (Fig. 3), welche etwa als Matte aus einem porösen schalldämpfenden Material, z.B. aus einem faserigen Material wie Glaswolle, Steinwolle oder aus einem Schaumstoff wie Melamin ausgebildet sein kann oder als flacher Sack aus textilem Material oder Folie, der mit einem faserigen Material, Schaumstoff oder auch einem Granulat gefüllt ist. Sie kann in Abschnitte aufgeteilt sein, die den Lochplatten 11 entsprechen. Die Isolationsschicht 19 isoliert die Deckenleitung und die Deckenplatten 2a,b,c,d thermisch an der Unterseite ab, also insbesondere von der Raumleitung und den Lochplatten 11. Zugleich erhöht sie die Schallabsorption des Deckenelements und verbessert so seine akustischen Eigenschaften.

Über einen Luftanschlusskasten 20 (Fig. 2) kann Zuluft, die auch gekühlt oder gewärmt sein kann, in den Zwischenraum zwischen der Unterseite der Raumdecke 8 und der Isolationsschicht 19 geleitet werden, welche dann durch Ausnehmungen am Rand der Isolationsschicht 19 und die Öffnungen in den Lochplatten 11 in den darunterliegenden Raum gelangt oder auch durch Öffnungen in Abkantungen der Zargen 12 gegen.die Unterseite der Raumdecke 8 geleitet wird und dann in den Raum absinkt.

Die beschriebenen Deckenelemente können in vielfacher Weise abgewandelt werden. So können sie mehr oder weniger Deckenplatten oder Lochplatten umfassen und der Aufbau der Deckenleitung und der Raumleitung kann von der gezeigten abweichen. Es ist auch nicht ausgeschlossen, kein Unterteil vorzusehen und die direkte Kühlung und Heizung des Raumes, soweit erforderlich, mit anderen als den beschriebenen Mitteln zu bewerkstelligen. Dabei kann dennoch eine unterhalb der Deckenleitung angeordnete Isolationsschicht vorgesehen sein, welche auch die Deckenplatten verdeckt und schalldämpfend wirkt.

Die Deckenelemente können sowohl zum Heizen als auch zum Kühlen benutzt werden, doch steht die Kühlung im Vordergrund und wird im Folgenden näher erläutert. Betriebsphasen, gewöhnlich während des Tages, in denen der Raum benützt wird und die Wärmelast hoch ist, wechseln mit Ruhephasen, gewöhnlich während der Nacht, in denen der Raum nicht benützt wird, ab.

Bei wie beschrieben aufgebauten Deckenelementen sind die Deckenleitung und die Raumleitung vorzugsweise voneinander unabhängig, sodass die Kühlung der Raumdecke über das Oberteil 1 und die direkte Kühlung des Raumes über das Unterteil 9 nicht miteinander gekoppelt sind. Je nach den Anforderungen und-Gegebenheiten, z.B. der Raumtemperatur, kann dann die Kühlung unterschiedlich zwischen dem Oberteil 1 und dem Unterteil 9 aufgeteilt werden. So kann etwa während einer Ruhephase bei ausreichend tiefer Temperatur des Raumes - z.B. nicht höher als 21°C - lediglich die Deckenleitung von Kühlmittel durchströmt werden, sodass zwar die Raumdecke 8 vorgekühlt wird, aber eine Unterkühlung des Raumes vermieden und zugleich Energie eingespart wird, während bei höherer Raumtemperatur der Raum auch direkt über die Raumleitung gekühlt wird.

Es ist aber auch nicht ausgeschlossen, Raumleitung und Deckenleitung in Reihe zu legen, also den Deckenvorlaufanschluss 3 mit dem Raumrücklaufanschluss 14 oder auch den Raumvorlaufanschluss 13 mit dem Deckenrücklaufanschluss 4 zu verbinden und die Verteilung der Kühlwirkung durch die Durchflussrate oder auch die Durchflussrichtung (Vertauschung von Vorlaufanschluss und Rücklaufanschluss) oder beide zu beeinflussen.

Die erfindungsgemässen Deckenelemente eignen sich zum Aufbau einer erfindungsgemässen Heiz- und Kühldecke, welche die Raumdecke 8 und eine Anzahl von Deckenelementen umfasst. Dabei ist die Unterseite der Raumdecke 8 nur zum Teil, insbesondere zu zwischen 20% und 80% von den Deckenelementen bedeckt. Diese sind vorzugsweise gleichmässig über die Unterseite der Raümdecke 8 verteilt, etwa derart, dass kein Punkt der besagten Unterseite weiter als 2m, vorzugsweise 1m von einem Deckenelement entfernt ist. Auf diese Weise wird die Schwierigkeit, welche sich aus der thermischen Isolation der Raumdecke 8 vom Raum durch die Isolationsschicht 19 ergibt, umgangen. Wenn nämlich die Raumdecke 8 während einer Ruhephase über die Oberteile 1 der Deckenelemente in den unmittelbar oberhalb der Deckenplatten 2a,b,c,d liegenden Bereichen stark abgekühlt wird, so wandert durch

Wärmeleitung in der Raumdecke 8 allmählich Wärme aus den zwischen den Deckenelementen liegenden freien Zwischenbereichen in diese Bereiche. Die Zwischenbereiche kühlen sich dadurch ebenfalls ab. Während der folgenden Betriebsphase nehmen sie dann, durch keine Isolation gehindert, vom darunterliegenden Raum durch Strahlung und Konvektion allmählich Wärme auf und tragen so zur Kühlung desselben bei.

### Bezugszeichenliste

- 1: Oberteil
- 2a,b,c,d: Deckenplatte
- 3: Deckenvorlaufanschluss
- 4: Deckenrücklaufanschluss
- 5: Längsleitung
- 6: Schlauch
- 7: Mäander
- 8: Raumdecke
- 9: Unterteil
- 10a,b,c: Abschnitt
- 11: Lochplatte
- 12: Zargen
- 13: Raumvorlaufanschluss
- 14: Raumrücklaufanschluss
- 15a,b: Längsleitung
- 16: Schlauch
- 17: Mäander
- 18: Schiene
- 19: Isolationsschicht
- 20: Luftanschlusskasten

## Patentansprüche

1. Deckenelement für eine Heiz- und Kühlvorrichtung, mit mindestens einer Deckenleitung zur Durchleitung eines fluiden Heiz- und Kühlmittels, das einen Deckenvorlaufanschluss (3) mit einem Deckenrücklaufanschluss (4) verbindet sowie mit mindestens einer Deckenplatte (2a, 2b, 2c, 2d) mit einer Oberseite, welche eine im wesentlichen ebene nach oben gerichtete Anlagefläche bildet, **dadurch gekennzeichnet, dass** die mindestens eine Deckenplatte (2a, 2b, 2c, 2d) aus einem verformbaren Material, besteht, dessen Wärmeleitfähigkeit mindestens 5W/mK beträgt und mindestens ein Abschnitt der Deckenleitung jeweils einen an der Unterseite der Deckenplatte angeordneten Mäander (7) bildet, dessen Zweige gleichmässig über die Unterseite verteilt sind, sodass er in enger wärmeleitender Verbindung mit der gesamten Deckenplatte (2a; 2b; 2c; 2d) steht.

2. Deckenelement nach Anspruch 1, **dadurch gekennzeichnet, dass** die der Mäander (7) der Deckenleitung so ausgebildet ist, dass kein Teil der Unterseite der mindestens einen Deckenplatte (2a, 2b, 2c, 2d) weiter als 15cm von demselben entfernt ist.

3. Deckenelement nach Anspruch 1 oder 2, **dadurch gekennzeichnet, dass** die Wärmeleitfähigkeit des Materials der mindestens einen Deckenplatte (2a, 2b, 2c, 2d) mindestens 30W/mK beträgt.

4. Deckenelement nach einem der Ansprüche 1 bis 3, **dadurch gekennzeichnet, dass** die mindestens eine Deckenplatte (2a, 2b, 2c, 2d) aus Aluminium oder einer Aluminiumlegierung besteht und ihre Dicke zwischen 0,3mm und 0,8mm beträgt.

5. Deckenelement nach einem der Ansprüche 1 bis 4, **dadurch gekennzeichnet, dass** die Anlagefläche der mindestens einen Deckenplatte (2a, 2b, 2c, 2d) einen Flächeninhalt von mindestens 0,2m² aufweist.

6. Deckenelement nach einem der Ansprüche 1 bis 5, **dadurch gekennzeichnet, dass** es eine unterhalb der Deckenleitung angeordnete Isolationsschicht (19) aufweist.

7. Deckenelement nach Anspruch 6, **dadurch gekennzeichnet, dass** die Isolationsschicht (19) poröses Material wie Glaswolle, Steinwolle, Melamin oder ein Granulat enthält.

8. Deckenelement nach einem der der Ansprüche 1 bis 7, **dadurch gekennzeichnet, dass** sie ausserdem eine mit Abstand unterhalb der Deckenleitung angeordnete Raumleitung zur Durchleitung eines fluiden Heiz- und Kühlmittels umfasst, welche einen Raumvorlauf (13) mit einem Raumrücklauf (14) verbindet,'sowie eine die mindestens eine Deckenplatte (2a, 2b, 2c, 2d) verdeckende, parallel unterhalb derselben angeordnete, gelochte ebene Abdeckung, an deren Oberseite die Raumleitung in enger wärmeleitender Verbindung mit derselben angeordnet ist.

9. Deckenelement nach Anspruch 8, **dadurch gekennzeichnet, dass** der Abstand zwischen der Deckenleitung und der Raumleitung mindestens 20mm beträgt.

10. Heiz- und Kühldecke, welche mehrere Deckenelemente (2a, 2b, 2c, 2d) nach einem der Ansprüche 1 bis 9 umfasst, **dadurch gekennzeichnet, dass** sie äusserdem eine Raumdecke (8) umfasst, an deren Unterseite die Deckenelemente (2a, 2b, 2c, 2d) angeordnet sind, wobei jeweils die Anlagefläche der Deckenplatte (2a; 2b; 2c; 2d) ganzflächig an der Unterseite der Raumdecke (8) anliegt.

11. Heiz- und Kühldecke nach Anspruch 10, **dadurch gekennzeichnet, dass** die Anlagefläche der Deckenplatte (2a, 2b, 2c, 2d) jeweils ganzflächig mit der Unterseite der Raumdecke (8) verklebt ist.

12. Heiz- und Kühldecke nach Anspruch 11, **dadurch gekennzeichnet, dass** die Verklebung durch eine aus einem Kleber bestehende Schicht hergestellt ist, deren Dicke höchstens 1mm beträgt.

13. Heiz- und Kühldecke nach einem der Ansprüche 10 bis 12, **dadurch gekennzeichnet, dass** die Deckenelemente zwischen 20% und 80% der Unterseite der Raumdecke bedecken.

14. Heiz- und Kühldecke nach einem der Ansprüche 10 bis 13, **dadurch gekennzeichnet, dass** kein Punkt der Unterseite der Raumdecke (8) weiter als 2m, vorzugsweise 1m von einem Deckenelement entfernt ist.

15. Heiz- und Kühldecke nach einem der Ansprüche 10 bis 15, **dadurch gekennzeichnet, dass** mindestens der an die Unterseite anschliessende Teil der Raumdecke (8) im wesentlichen aus Beton besteht.
